# EUROPEAN PATENT SPECIFICATION

(11) **EP 3 767 322 B1**
(45) Date of publication and mention of the grant of the patent: **03.04.2024**
(21) Application number: 20185937.8
(22) Date of filing: 15.07.2020
(51) Int. Cl.: G01S 7/03, H01Q 3/26, H01Q 3/38, G01S 13/44

(54) **MULTI-BEAM PHOTONIC MONOPULSE COMPARATOR**
MEHRSTRAHLIGER PHOTONISCHER MONOPULSKOMPARATOR
COMPARATEUR MONOPULSÉ PHOTONIQUE À FAISCEAUX MULTIPLES

(30) Priority: 16.07.2019 US 201916512658
(43) Date of publication of application: 20.01.2021
(73) Proprietor: Rockwell Collins, Inc., Cedar Rapids, IA 52498 (US)
(72) Inventor: ESMAN, Ronald D., McLean, VA Virginia 22102 (US)
(74) Representative: Dehns

(56) References cited:
- US-A- 4 814 773

## Description

### BACKGROUND

Monopulse radar, also known as simultaneous lobe comparison, provides the direction of arriving radiation (e.g., radio frequency (RF) or other electromagnetic signals) by comparing the signals produced by monopulse elements steered in slightly different directions ("squinted" subarrays or signals). Monopulse radar may be useful for determining angle of arrival in one or more dimensions, but electronic components may provide challenges with respect to their performance, loss, or relative size. Further, it may not be possible via conventional RF electronics to achieve multiple simultaneous beams (e.g., simultaneous beamforming and generation of comparator output) over wide bandwidths. US 4,814,773 relates to feed networks for electronically scanned radars.

### SUMMARY

A multi-beam photonic monopulse comparator is provided in claim 1. In embodiments, the multi-beam photonic monopulse comparator includes laser emitters or other photonic input sources for generating a set of M photonic inputs, each input corresponding to one of M component wavelengths. The M photonic inputs are multiplexed into a combined photonic input and then split into equivalent photonic inputs (e.g., into 4 quadrant inputs and again into 4N elemental inputs, where each of four quadrant subarrays incorporates N array elements). Within each of the N array elements of the four quadrant subarrays, each elemental input is demultiplexed into a set of M elemental channels (again corresponding to the M component wavelengths). An array of M optical attenuators then apodize each elemental channel before re-multiplexing into a combined photonic elemental input. Antenna elements within each array element receive an inbound radio frequency (RF) signal which feeds a dual-output (DO) electro-optical modulator (EOM) which modulates the combined photonic elemental input into two modulated photonic
signals having a relative phase of 180 degrees (e.g., one positive polarity, one negative polarity). Positive-polarity and negative-polarity demultiplexers separate the modulated photonic signals into arrays of wavelength-specific M optical delay channels. Each array of optical delay channels is time-delayed by an array of optical time delay units, each component wavelength associated with a distinct time delay. Each array of time-delayed optical delay channels (positive and negative) is then split, copying each time-delayed optical delay channel. The multi-beam photonic monopulse comparator includes single mode/multimode (SM/MM) couplers for receiving the time-delayed optical delay channels (e.g., photonic channels) and simultaneously generating 1) an antenna beam corresponding to each component wavelength (and to a beam direction) and 2) photonic comparator outputs, or photonic equivalents of two-dimensional monopulse comparator outputs (e.g., sum, elevational difference, azimuthal difference). An array of high-speed photodiodes coupled to the SM/MM couplers convert the antenna beam and photonic comparator outputs to RF beam and comparator output signals, which may then be digitized and processed to determine directional information of the inbound RF signal.

A method for simultaneous multi-beam photonic comparator operations is also provided in claim 10. In embodiments, the method includes generating M photonic inputs, each photonic input corresponding to one of M component wavelengths. The method includes multiplexing the M component photonic inputs into a combined input. The method includes splitting the combined input into a set of equivalent photonic inputs, e.g., one equivalent photonic input per N array elements of four quadrant subarrays. The method includes, within each of the four quadrant subarrays and N array elements, apodizing the demultiplexed component wavelengths of each combined photonic input via optical attenuators. The method includes receiving, within each array element, an inbound RF signal via an antenna element. The method includes modulating the apodized combined photonic inputs according to the inbound RF signal via dual-output electro-optical modulators (DO-EOM), generating positive-polarity and negative-polarity photonic signals having a relative phase of 180 degrees. The method includes demultiplexing each modulated photonic signal into an array of M wavelength-specific optical delay channels. The method includes time-delaying each optical delay channel according to its associated component wavelengths. The method includes copying each time-delayed optical delay channel via optical splitters. The method includes simultaneously combining, via single mode/multimode (SM/MM) couplers, the time-delayed optical delay channels into M antenna beams (each antenna beam corresponding to a component wavelength) and M corresponding sets of three photonic comparator outputs (elevational difference, sum, azimuthal difference). The method includes simultaneously generating, via high-speed photodiodes, M RF beam signals based on the antenna beams and M sets of 3 RF output signals, each output signal based on a photonic comparator output.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of an architecture for a noncoherent photonic beamformer;
FIG. 2 is a diagrammatic illustration of a multiple-beam architecture of the noncoherent photonic beamformer of FIG. 1;
FIGS. 3A and 3B are diagrammatic illustrations of a simultaneous photonic monopulse comparator in accordance with example embodiments of this disclosure;
and FIGS. 4A through 4C are flow diagrams illustrating a method for multi-beam photonic beamforming with simultaneous comparator output.

### DETAILED DESCRIPTION

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein.

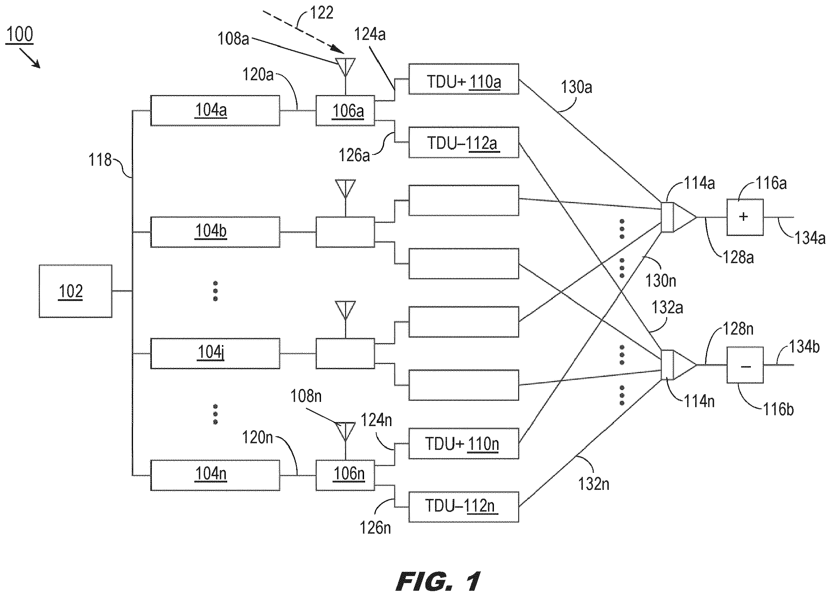

Referring to FIG. 1, an N-element noncoherent true time delay (TTD) photonic beamformer 100 is disclosed. The noncoherent photonic beamformer 100 may include a photonic source 102 (PS), optical attenuators 104a-n, electro-optical modulators 106a-n (EOM), radio frequency (RF) antenna elements 108a-n, optical time delay units 110a-n, 112a-n (TDU), single-mode/multimode (SM/MM) couplers 114a-b, and high-speed photodiodes 116a-b (e.g., photodetectors). One or more components of the photonic beamformer 100 may be interconnected or linked, e.g., via optical fiber, optical waveguide, or any other appropriate optical transmission medium associated with an optical path. Further, the noncoherent photonic beamformer 100 or its components may include additional amplifiers or filters positioned in the optical path (e.g., or proximate to the antenna elements 108a-n) to prevent or alleviate signal loss. The SM/MM couplers 114a-b (e.g., some examples may be referred to as a "photonic lantern") serve to combine signals of possibly equal wavelength onto a single photodiode 116a-b without suffering from coherent interference effects. Throughout the various embodiments disclosed, the terms "photonic" and "optical" are interchangeable.

The photonic beamformer 100 may be embodied in a two-dimensional array covering two angular dimensions via four quadrant subarrays A, B, C, D, as substantially disclosed by pending U.S. Patent Application Serial No. 16/265,659. Each quadrant subarray A, B, C, D may incorporate N array elements (e.g., RF antenna elements 108a-n), each array element having a particular orientation or direction. The PS 102 may be a continuous-wave or pulsed laser configured for emission of a photonic input 118 (e.g., optical input). The photonic input 118 may be split into N equivalent inputs, each input apodized (i.e., weighting to accomplish beamshaping, focusing, or removal of Airy disks) by an optical attenuator 104a-n. The EOM 106a-n may be broadband dual-output (DO) electro-optical modulators (EOM) (e.g., directional coupler modulator (DCM), dual-output Mach-Zehnder modulator (DO-MZM), or any other appropriate DO modulator having dual outputs of opposing polarity) configured for intensity modulation of the N apodized photonic inputs (120a-n) according to the inbound RF signal 122 received at each antenna element 108a-n, possibly filtered or amplified (not shown), resulting in 2N RF-modulated photonic signals 124a-n (e.g., positive-polarity modulated photonic signals), 126a-n (e.g., negative-polarity modulated photonic signals). The relative phase between the RF modulation on the photonic signals (124a-n vs. 126a-n) is nominally 180 degrees. The RF-modulated photonic signals 124a-n, 126a-n may each be optically delayed by 2N optical TDUs (e.g., N positive TDUs 110a-n (TDU+) time delay the positive-polarity modulated photonic signals 124a-n and N negative TDUs 112a-n (TDU-) time delay the negative-polarity modulated photonic signals 126a-n) by a particular time delay in order to provide wideband time-delayed beamforming. The SM/MM couplers 114a-b may achieve beamforming by selective signal combination in the optical domain; for example, the SM/MM coupler 114a may generate a positive-polarity antenna beam 128a via combination of the N time-delayed positive-polarity modulated photonic signals 130an from each of the N array elements, while the SM/MM coupler 114b may generate a negative-polarity antenna beam 128b via combination of the N time-delayed negative-polarity modulated photonic signals 132a-n from each of the N array elements. The photodiodes 116a-b may in turn generate RF beam signals 134a-b by respectively converting the positive-polarity and negative-polarity photonic signals into RF signals 128a-b. An advantage of the photonic beamformer 100 is that, instead of digitizing RF signals from all N antenna elements 108a-n, only two RF beam signals 134a-b need to be digitized for further processing and storage.

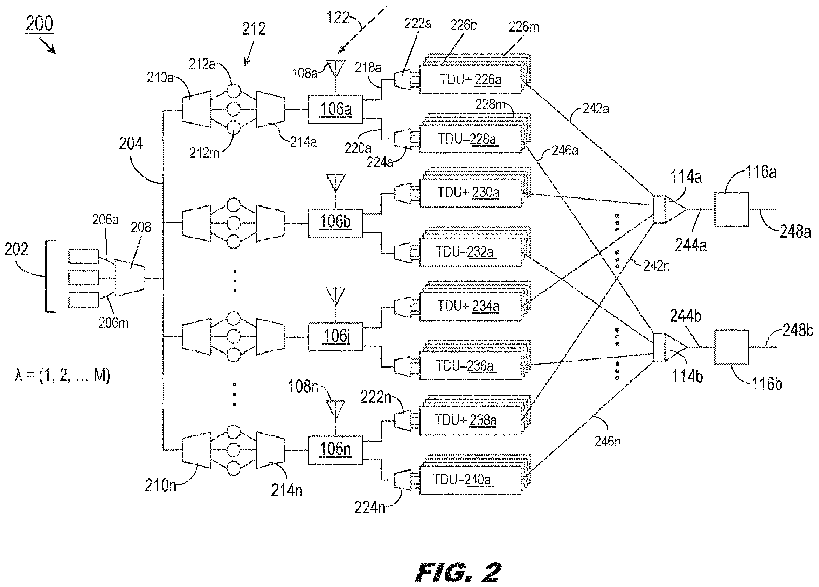

Referring to FIG. 2, a multiple-beam photonic beamformer 200 is disclosed. The photonic beamformer 200 may be implemented and may operate similarly to the N-element noncoherent true time delay (TTD) photonic beamformer 100 of FIG. 1, except that the photonic beamformer 200 may incorporate a multiple-wavelength PS 202, e.g., an array of M distributed feedback lasers (DFL) configured for generating a photonic input 204 comprising M multiple discrete wavelengths 206a-m (λ₁, λ₂, ... λ_{M}) multiplexed (muxed) by an arrayed waveguide grating 208 (AWG) or any appropriate similar wavelength-selective multiplexer (mux) and split into N equivalent feeds, e.g., using a wavelength-independent splitter.

The photonic beamformer 200 may replace the optical attenuators 104a-n (FIG. 1) with, for each array element 1 ... N, an AWG wavelength selective demultiplexer 210a-n (demux), wavelength-selective optical attenuator bank 212, and AWG wavelength-selective mux 214a-n. For example, the demux 210a-n may demultiplex the photonic input 204 into its M component wavelengths, each individual component wavelength apodized by a wavelength-selective optical attenuator 212a-m and recombined into an apodized photonic input 216a-n by the mux 214a-n. The apodized photonic inputs 216a-n may be modulated (via the EOM 106a-n) according to the inbound RF signal 122 received by the antenna elements 108a-n (e.g., and possibly preprocessed by filters, amplifiers, etc. (not shown)). The positive-polarity modulated photonic signals 218a-n and negative-polarity modulated photonic signals 220a-n output by the EOM 106a-n may each be demuxed (via positive and negative demuxes 222a-n, 224a-n) into M component wavelength channels, each wavelength channel sent through an optical TDU (e.g., TDU+ 226a-m corresponding to array element 1, 230a-m corresponding to array element 2, 234a-m corresponding to array element j, and 238a-m corresponding to array element N; similarly TDU- 228a-m (1), 232a-m (2), 236a-m (j), 240a-m (N)) to time-delay the wavelength channel according to a time delay for each component wavelength (206a-m), e.g., the time delay set to steer the received beam direction).

The photonic beamformer 200 may incorporate a pair of SM/MM couplers 114a-b and photodiodes 116a-b for each of the M component wavelengths 206a-m. For example, the SM/MM coupler 114a may collect the N time-delayed positive-polarity modulated photonic signals 242a-n of a given wavelength (206a-m) output by the TDU+ 226a, 230a ... 234a ... 238a (e.g., for each array element 1 through N), forming a wavelength-selective positive-polarity optical antenna beam 244a therefrom. Similarly, and simultaneously, the SM/MM coupler 114b may collect the N time-delayed negative-polarity modulated photonic signals 246a-n of a given wavelength (206a-m) output by the TDU- 228a, 232a ... 236a ... 240a, forming a wavelength-selective negative-polarity optical antenna beam 244b therefrom. The wavelength-selective positive-polarity and negative polarity optical antenna beams 244a-b may be respectively converted into wavelength-selective positive-polarity and negative-polarity RF beam signals 248a-b by the photodiodes 116a-b. In this way, the photonic beamformer 200 may generate M beams, one for each of the M component wavelengths 206a-m.

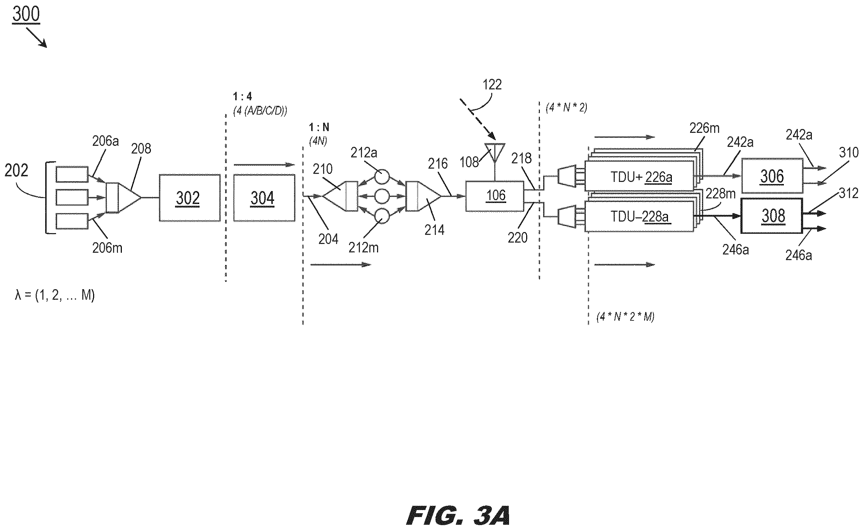

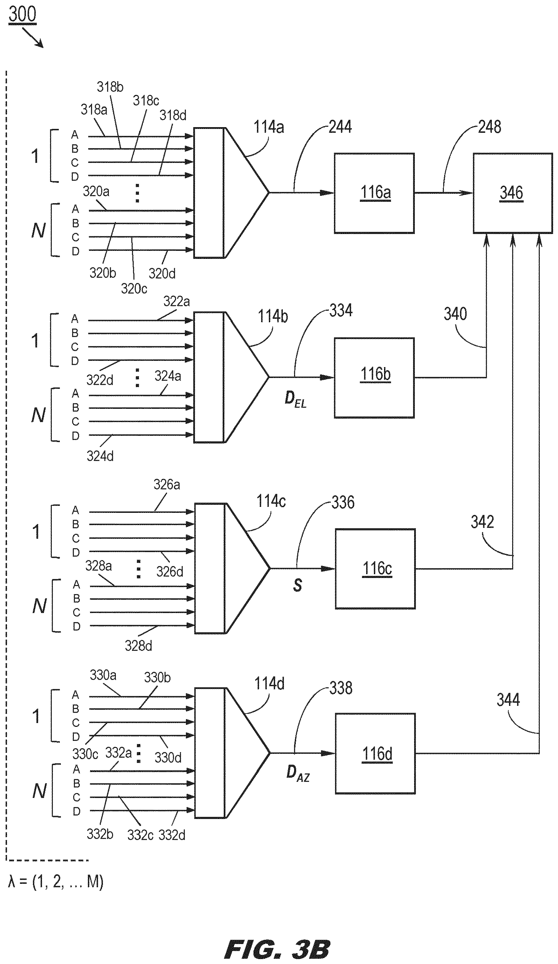

Referring to FIGS. 3A and 3B, a multi-beam photonic monopulse comparator 300 is disclosed. The photonic monopulse comparator 300 may be implemented and may function similarly to the multiple-beam photonic beamformer 200 of FIG. 2, except that the photonic monopulse comparator 300 may route the M component wavelengths through 4 quadrant subarrays and provide for simultaneous generation of wavelength-selective antenna beams and their corresponding monopulse comparator outputs. For example, as substantially disclosed by U.S. Patent Application Serial No. 16/265,659, given a monopulse array incorporating four subarrays in two angular dimensions receiving inbound RF signals 122 from squinted directions and producing signals A, B, C, D (e.g., voltage outputs), it is possible to convert the antenna signals A, B, C, D into a sum S, an azimuthal difference D_{AZ}, and an elevational difference D_{EL}, with the azimuthal angle and elevational angle of the inbound RF signal 122 relative to the monopulse array derivable therefrom (a diagonal difference may additionally be generated and remain unused).

Referring in particular to FIG. 3A, in embodiments, the photonic input 204 (e.g., comprising M component wavelengths 206a-m, FIG. 2) may be passed through a 1:4 optical splitter 302, and from each 1:4 optical splitter 302 to a 1:N optical splitter 304, to generate 4N equivalent photonic inputs (e.g., or an equivalent photonic input 204 for each of N array elements of each of 4 quadrant subarrays A/B/C/D). Each of the 4N photonic inputs 204 may then be demuxed (210) into its M component wavelengths (206a-m), the component wavelengths each apodized by an optical attenuator (212a-m) and muxed (214) into a single apodized photonic input 216. Each apodized photonic input 216 may be modulated (via the broadband DO-EOM 106) according to the inbound RF signal 122 received by the antenna element 108 (of each array element 1-N of each quadrant subarray A-D). Similarly, the output of each DO-EOM 106, e.g., the positive-polarity modulated photonic signal 218 and negative-polarity modulated photonic signal 220, may be demuxed (via positive demux 222 and negative demux 224) into their M component wavelength channels and respectively time-delayed by TDU+ 226a-m and TDU- 228a-m (e.g., 4N blocks of 2M TDU each (M TDU+/M TDU-)). The resulting 4 × N × M time-delayed positive-polarity modulated photonic signals 242 (and the 4 × N × M time-delayed negative-polarity modulated photonic signals 246) may each be copied by an optical splitter 306, 308, such that each time-delayed positive-polarity modulated photonic signal 242 and each time-delayed negative-polarity modulated photonic signal 246 has at least one copy 310, 312 (similarly for, resulting in a 4 × N × 2 × M × 2 total time delayed modulated photonic output signals).

Referring in particular to FIG. 3B, the photonic monopulse comparator 300 may incorporate, for each component wavelength (206a-m), a block of four SM/MM couplers 114a-d and four photodiodes 116a-d. Each SM/MM coupler 114a-d may receive a total of 4N inputs, or one input corresponding to each array element (1 ... N) of each quadrant subarray (1-4). For example, the SM/MM coupler 114a-d may receive time-delayed modulated photonic inputs 318a-d ... 320a-d, each time-delayed modulated photonic input 318a corresponding to a time-delayed positive-polarity or negative-polarity modulated photonic signal (e.g., 242a or 246a (FIG. 3A)) and to a quadrant subarray (A-D), and each set of time-delayed modulated photonic inputs 318a-d corresponding to an array element (1 ... N). The inputs 318a-d ... 320a-d to each SM/MM coupler 114a-d may each combine, or simultaneously incorporate, the corresponding time-delayed positive-polarity or negative-polarity modulated photonic inputs. Similarly and simultaneously, the SM/MM couplers 114b-d may respectively receive 4N time-delayed simultaneous positive/negative modulated photonic inputs 322a-d ... 324a-d; 326a-d ... 328a-d; and 330a-d ... 332a-d, each set of inputs based on copies (310/312) of the original time-delayed positive-polarity and negative-polarity modulated photonic inputs 242a, 246a. Typically, only positive or only negative polarity signals may be combined from a given quadrant A, B, C, or D, depending on the corresponding output of the SM/MM couplers 114b-d, which are photonic versions of monopulse comparator outputs. For example, the SM/MM coupler 114b may generate a photonic comparator output 334 corresponding to a two-dimensional elevation difference (D_{EL} = [(A+C) - (B+D)] / 2), and thus its A-quadrant and C-quadrant inputs (322a, 322c ... 324a, 324c) may be positive-polarity while its B-quadrant and D-quadrant inputs (322b, 322d ... 324b, 324d) may be negative-polarity. Similarly, the SM/MM coupler 114c may generate a photonic comparator output 336 corresponding to a two-dimensional sum (S = (A+B+C+D) / 2) and based solely on positive-polarity inputs. Finally, the SM/MM coupler 114d may generate a photonic comparator output 338 corresponding to a two-dimensional azimuthal difference (D_{AZ} = [(C+D) - (A+B)] / 2), based on positive-polarity C-quadrant and D-quadrant inputs (330b, 330d ... 332b, 332d) and negative-polarity A-quadrant and B-quadrant inputs (330a, 330c ... 332a, 332c).

In embodiments, the SM/MM coupler 114a may combine its 4N time-delayed modulated photonic inputs 318a-d ... 320a-d to form an optical antenna beam 244 corresponding to the component wavelength (206a-m, FIG. 2) and to the corresponding beam direction. The SM/MM couplers 114b-d may simultaneously combine their respective 4N time-delayed modulated photonic inputs (322a-d ... 324a-d; 326a-d ... 328a-d; and 330a-d ... 332a-d) in the optical domain to generate photonic comparator outputs 334, 336, 338 equivalent to monopulse comparator outputs corresponding to the beam direction of the optical antenna beam 244. The photodiodes 116a-d may respectively, and simultaneously, convert the optical antenna beam 244 and the photonic comparator outputs 334, 336, 338, generating an RF beam signal 248 and RF output signals 340, 342, 344 (again corresponding to D_{EL}, S, and D_{AZ} respectively). As noted above, the RF beam signal and RF output signals (248, 340, 342, and 344) are comparable to conventional RF outputs from conventional monopulse comparators; however, the photonic approach provides the added benefit of multiple simultaneous beams over wide bandwidths.

In embodiments, the photonic monopulse comparator 300 may further incorporate digital signal processors 346 (DSP) for digitizing the RF beams and calculating, in the digital domain, angle of arrival information (e.g., azimuthal angle, elevational angle) of the inbound RF signal 122 based on the RF beam signal 248 and the RF output signals 340, 342, 344.

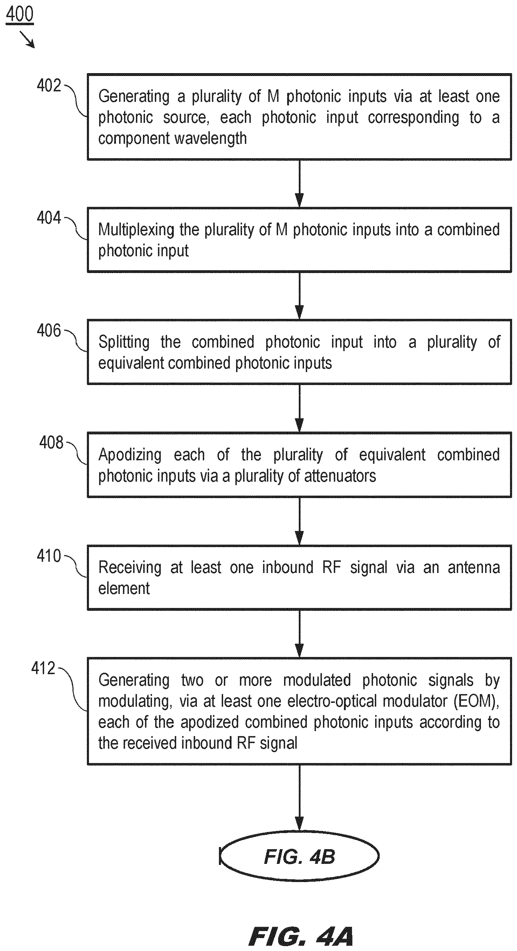

Referring to FIGS. 4A through 4C, the method 400 may be executed by embodiments of the photonic monopulse comparator 300 and may include the following steps.

At a step 402, a photonic signal source generates a set of M photonic inputs, each photonic input corresponding to a distinct component wavelength.

At a step 404, the set of M wavelength-selective photonic inputs is multiplexed (e.g., combined) into a single combined photonic input by an arrayed waveguide grating (AWG) or similar multiplexer.

At a step 406, an optical splitter splits the combined photonic input into multiple equivalent photonic inputs. For example, a quadrant splitter may split the photonic input into four equivalent inputs, or one per quadrant. An elemental splitter may further split the quadrant-specific input into N equivalent photonic inputs, or one per array element (e.g., of an N-element array).

At a step 408, a bank of optical attenuators may apodize each of the component wavelengths of each equivalent photonic input (e.g., after the photonic input is demultiplexed into its M component wavelengths and before the apodized component wavelengths are multiplexed back into a single apodized photonic input).

At a step 410, an antenna element (e.g., each of N array elements per quadrant) receives an inbound RF signal (e.g., at a particular angle of arrival). The inbound RF signal may be filtered, amplified, or otherwise processed.

At a step 412, each apodized photonic input is modulated according to the received RF signal by a Mach-Zehnder modulator (MZM) or similar dual-output electro-optical modulator, generating positive-polarity and negative-polarity modulated photonic signals having a relative RF phase of 180 degrees.

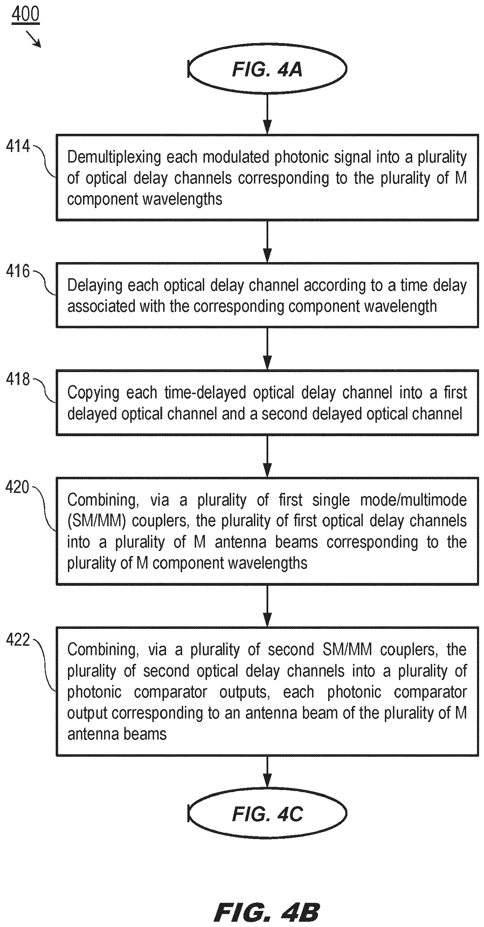

Referring in particular to FIG. 4B, at a step 414, the positive-polarity and negative-polarity modulated photonic signals are each demultiplexed into a set of M optical delay channels, each delay channel corresponding to a component wavelength.

At a step 416, each optical delay channel is delayed according to a time delay corresponding to the component wavelength.

At a step 418, each optical delay channel is copied into at least a first, or original, optical delay channel and a second, or copied, optical delay channel.

At a step 420, single mode/multimode (SM/MM) couplers combine the time-delayed optical delay channels to generate M optical antenna beams, each beam (as well as the set of time-delayed optical delay channels received by each coupler) corresponding to a component wavelength and its RF beam.

At a step 422, additional SM/MM couplers combine the copied time-delay optical delay channels to generate photonic comparator outputs corresponding to the antenna beams. For example, an elevational difference, sum, and azimuthal difference may be generated simultaneously with the optical antenna beam.

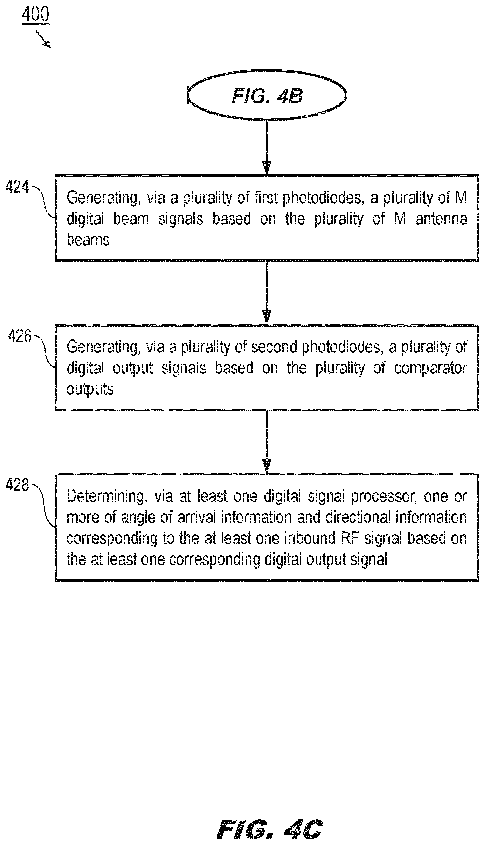

Referring to FIG. 4C, at a step 424, a set of photodiodes generates wavelength-selective RF beam signals based on optical antenna beams (i.e., photonic signals) received from the SM/MM couplers

At a step 426, an additional set of photodiodes generates RF output signals based on the photonic comparator outputs received from the SM/MM couplers, creating the RF comparator output signals simultaneously with the RF beam signals.

In some embodiments, the method 400 includes an additional step 428. At the step 428, digital signal processors digitize the RF signals and determine angle of arrival information (e.g., elevational angle, azimuthal angle) based on the RF beam signals and comparator outputs received from the photodiodes.

## Claims

1. A multi-beam photonic monopulse comparator (200, 300), comprising:
a plurality of photonic input sources (202), each photonic input source configured to generate a photonic input (206a-m) associated with a component wavelength;
a first multiplexer (208), mux, optically coupled to the plurality of photonic input sources and configured to combine the plurality of photonic inputs into a combined photonic input (204);
said photonic monopulse comparator (200, 300) being **characterized by** further comprising:
at least one first optical splitter (302, 304) optically coupled to the first mux and configured to split the combined photonic input into a plurality of combined photonic inputs;
a plurality of array elements optically coupled to the at least one first optical splitter, each array element comprising:
a first demultiplexer (210, 210a-n), demux, configured to separate the combined photonic input into a plurality of elemental channels corresponding to the plurality of component wavelengths;
an array of attenuators (212a-m) optically coupled to the first demux, each attenuator configured to apodize the corresponding elemental channel;
a second multiplexer (214, 214a-n) (mux) optically coupled to the array of attenuators, the second mux configured to combine the apodized elemental channels into an elemental input (216, 216a-n);
at least one antenna element (108, 108a-n) configured to receive an inbound radio frequency, RF, signal (122);
an electro-optical modulator (106, 106a-n), EOM, in communication with the antenna element and optically coupled to the second mux, the EOM configured to generate at least two modulated photonic signals (218a-n, 220a-n) by modulating the elemental input based on the inbound RF signal;
at least two second demuxes (222a-n, 224a-n) optically coupled to the EOM, each second demux configured to separate the associated modulated photonic signal into an array of optical delay channels corresponding to the plurality of component wavelengths;
an array (226a-m, 228a-m, 230a-m, 232a-m, 234a-m, 236a-m, 238am, 240a-m) of optical time delay units, TDU, optically coupled to each second demux, each optical TDU configured to delay the corresponding optical delay channel by a time delay corresponding to a component wavelength;
and
a plurality of second optical splitters (306, 308) optically coupled to the optical TDUs, each second optical splitter configured to split the corresponding time-delayed optical delay channel into a first delayed photonic channel (242a-m, 246a-m) and a second delayed photonic channel (310, 312);
a plurality of single mode/multimode, SM/MM, couplers (114a-d) optically coupled to the plurality of array elements and comprising:
a plurality of first SM/MM couplers (114a) configured to 1) receive the plurality of first delayed photonic channels (242a-n, 246a-n, 318a-d, 320a-d) and 2) generate a plurality of first photonic output signals including at least one antenna beam (244, 244a-b) corresponding to each component wavelength by combining two or more first delayed photonic channels;
and
a plurality of second SM/MM couplers (114b-d) configured to 1) receive the plurality of second delayed photonic channels (310, 312, 322a-d, 324a-d, 326a-d, 328a-d, 330a-d, 332a-d) and 2) generate a plurality of second photonic output signals (334, 336, 338) by combining two or more second delayed photonic channels, the plurality of second photonic output signals including at least one photonic comparator output;
and
a plurality of photodetectors (116a-d) optically coupled to the plurality of SM/MM couplers and comprising:
a plurality of first photodetectors (116a) configured to convert the at least one antenna beam to an RF beam signal (248, 248a-b);
and
a plurality of second photodetectors (116b-d) configured to convert the at least one photonic comparator output to an RF output signal (340, 342, 344).

2. The multi-beam photonic monopulse comparator (200, 300) of claim 1, wherein:
the plurality of photonic sources includes M photonic sources where M is an integer, each photonic source associated with a component wavelength;
the plurality of elemental channels includes M elemental channels corresponding to the M component wavelengths;
the array of attenuators includes M attenuators (212a-m) corresponding to the M component wavelengths;
each second demux is configured to separate the associated modulated photonic signal into an array of M optical delay channels corresponding to the M component wavelengths;
the plurality of first SM/MM couplers (114a) includes M first SM/MM couplers, each first SM/MM coupler configured to generate the antenna beam corresponding to the component wavelength of the corresponding first optical delay channel;
and
the plurality of first photodetectors (116a) includes M first photodetectors corresponding to the M component wavelengths.

3. The multi-beam photonic monopulse comparator (200, 300) of claim 2, wherein the at least one photonic comparator output includes:
1) a first photonic comparator output (334) corresponding to an elevational difference, to a first plurality of M second SM/MM couplers (114b), and to a first plurality of M second photodetectors (116c);
2) a second photonic comparator output (336) corresponding to a sum, to a second plurality of M second SM/MM couplers (114c), and to a second plurality of M second photodetectors (114d);
and
3) a third photonic comparator output (338) corresponding to an azimuthal difference, to a third plurality of M SM/MM couplers (114d), and to a third plurality of M second photodetectors (116d).

4. The multi-beam photonic monopulse comparator (200, 300) of claim 2, wherein:
the EOM includes a Mach-Zehnder modulator, MZM, configured to generate at least a positive modulated photonic signal (218, 218a-n) and a negative modulated photonic signal (220, 220a-n) having a relative RF phase of 180 degrees;
the at least two second demuxes include:
a positive demux (222, 222a-n) configured to separate the positive modulated photonic signal into an array of M positive optical delay channels corresponding to the M component wavelengths;
and
a negative demux (224, 224a-n) configured to separate the negative modulated photonic signal into an array of M negative optical delay channels corresponding to the M component wavelengths;
and
the array of optical TDUs includes:
an array of M positive TDUs (226a-m, 230a-m, 234a-m, 238a-m) optically coupled to the positive demux, each positive TDU configured to delay the corresponding positive optical delay channel by a time delay corresponding to a component wavelength of the M component wavelengths;
and
an array of M negative TDUs (228a-m, 232a-m, 236a-m, 240a-m) optically coupled to the negative demux, each negative TDU configured to delay the corresponding negative optical delay channel by a time delay corresponding to a component wavelength of the M component wavelengths.

5. The multi-beam photonic monopulse comparator (200, 300) of any preceding claim, wherein the at least one first optical splitter includes a quadrant splitter (302) configured to split the combined photonic input into four quadrant photonic input, each quadrant photonic input corresponding to a quadrant subarray.

6. The multi-beam photonic monopulse comparator (200, 300) of claim 5, wherein the at least one first optical splitter includes an elemental splitter (304) coupled to each quadrant splitter, each elemental splitter configured to split the quadrant photonic input into a plurality of N elemental inputs, where N is an integer, each elemental input corresponding to an array element of the plurality of N array elements associated with the quadrant subarray,
wherein
the first demux of the corresponding array element is configured to separate the corresponding elemental input into the plurality of elemental channels.

7. The multi-beam photonic monopulse comparator (200, 300) of claim 6, wherein:
each first SM/MM coupler (114a) is configured to receive a plurality of 4N first delayed photonic channels (318a-d, 320a-d) corresponding to each array element of each quadrant subarray;
each second SM/MM coupler (114b-d) is configured to receive a plurality of 4N second delayed photonic channels (322a-d, 324a-d, 326a-d, 328a-d, 330a-d, 332a-d) corresponding to each array element of each quadrant subarray.
and
the plurality of first SM/MM couplers and the plurality of second SM/MM couplers are configured for simultaneous operation.

8. The multi-beam photonic monopulse comparator (200, 300) of claim 7, wherein each received first delayed optical channel and each received second delayed optical channel incorporates a positive-polarity photonic channel or a negative-polarity photonic channel having a relative phase of 180 degrees.

9. The multi-beam photonic monopulse comparator of any preceding claim, further comprising:
at least one digital signal processor (346), DSP, coupled to the plurality of second photodetectors, the DSP configured to at least one of digitize and calculate angle of arrival information corresponding to the at least one inbound RF signal (122) based on the at least one corresponding RF output signal (340, 342, 344).

10. A method (400) for multi-beam photonic monopulse comparator operations, comprising:
generating a plurality of M photonic inputs (206a-m) via at least one photonic input source (202), each photonic input corresponding to a component wavelength;
multiplexing the plurality of M photonic inputs into a combined photonic input (204); **characterized by**:
splitting the combined photonic input into a plurality of equivalent combined photonic inputs;
demultiplexing each combined photonic input into a plurality of M elemental channels;
apodizing each of the plurality of elemental channels via a plurality of attenuators (212a-m);
multiplexing each plurality of apodized elemental channels into an apodized elemental input (216);
receiving at least one inbound RF signal (122) via an antenna element (108, 108an);
generating two or more modulated photonic signals (218, 218a-n, 220, 220a-n) by modulating, via at least one electro-optical modulator (106, 106a-n), EOM, each of the apodized elemental inputs according to the received inbound RF signal;
demultiplexing each modulated photonic signal into a plurality of optical delay channels corresponding to the plurality of M component wavelengths;
delaying each optical delay channel according to a time delay (226a-m, 228a-m, 230a-m, 232a-m, 234a-m, 236a-m, 238a-m, 240a-m) associated with the corresponding component wavelength;
copying each time-delayed optical delay channel into a first delayed optical channel (242a-n, 246a-n) and a second delayed optical channel (310, 312);
combining, via a plurality of first single mode/multimode, SM/MM, couplers (114a), the plurality of first optical delay channels into a plurality of M antenna beams (244, 244a-b) corresponding to the plurality of M component wavelengths;
combining, via a plurality of second SM/MM couplers (114b-d), the plurality of second optical delay channels into a plurality of photonic comparator outputs (334, 336, 338), each photonic comparator output corresponding to an antenna beam of the plurality of M antenna beams;
generating, via a plurality of first photodiodes (116a), a plurality of M RF beam signals (248, 248a-b) based on the plurality of M antenna beams;
and
generating, via a plurality of second photodiodes (116b-d), a plurality of RF output signals (340, 342, 344) based on the plurality of comparator outputs.

11. The method (400) of claim 10, wherein splitting the combined photonic input into a plurality of equivalent combined photonic inputs includes:
splitting the combined photonic input into a plurality of four quadrant photonic inputs, each quadrant photonic input corresponding to a quadrant subarray;
and
splitting each quadrant photonic input into a plurality of N elemental inputs corresponding to a plurality of N array elements associated with the quadrant subarray.

12. The method (400) of claim 10 or 11, wherein generating two or more modulated photonic signals by modulating, via an electro-optical modulator, EOM, each of the apodized combined photonic inputs according to the received inbound RF signal includes:
generating at least a positive modulated photonic signal (218, 218a-n) and a negative modulated photonic signal (220, 220a-n) having a relative phase of 180 degrees by modulating, via at least one Mach-Zehnder modulator (MZM), each apodized combined photonic input according to the received inbound RF signal.

13. The method (400) of any of claims 10-12, wherein combining, via a plurality of second SM/MM couplers, the plurality of second optical delay channels into a plurality of comparator outputs, each comparator output corresponding to an antenna beam of the plurality of M antenna beams includes:
combining, via a plurality of second SM/MM couplers (114b-d), the plurality of second optical delay channels into at least one of 1) a first comparator output (334) corresponding to an elevational difference of the antenna beam, 2) a second comparator output (336) corresponding to a sum of the antenna beam, and 3) a third comparator output (338) corresponding to an azimuthal difference of the antenna beam.

14. The method (400) of any of claims 10-13, wherein:
combining, via a plurality of second SM/MM couplers, the plurality of second optical delay channels into a plurality of photonic comparator outputs includes
combining the plurality of second optical delay channels into a plurality of photonic comparator outputs (334, 336, 338) simultaneously with the combining, via a plurality of first single mode/multimode (SM/MM) couplers, of the plurality of first optical delay channels into a plurality of M antenna beams (244);
and
generating, via a plurality of second photodiodes, a plurality of RF output signals based on the plurality of comparator outputs includes
generating the plurality of RF output signals (340, 342, 344) simultaneously with the generating, via a plurality of first photodiodes, the plurality of M RF beam signals (248).

15. The method (400) of any of claims 10-14, further comprising:
determining, via at least one digital signal processor (346), angle of arrival information corresponding to the at least one inbound RF signal (122) based on the at least one corresponding RF output signal (340, 342, 344).

## Patentansprüche

1. Mehrstrahliger photonischer Monopulskomparator (200, 300), umfassend:
eine Vielzahl von photonischen Eingangsquellen (202), wobei jede photonische Eingangsquelle zum Generieren eines photonischen Eingangs (206a-m), der einer Komponentenwellenlänge zugeordnet ist, konfiguriert ist;
einen ersten Multiplexer (208), MUX, der mit der Vielzahl von photonischen Eingangsquellen optisch gekoppelt ist und zum Kombinieren der Vielzahl von photonischen Eingängen zu einem kombinierten photonischen Eingang (204) konfiguriert ist,
**dadurch gekennzeichnet, dass** der Monopulskomparator (200, 300) ferner umfasst:
mindestens einen ersten optischen Splitter (302, 304), der mit dem ersten MUX optisch gekoppelt ist und zum Aufteilen des kombinierten photonischen Eingangs in mehrere kombinierte photonische Eingänge konfiguriert ist;
eine Vielzahl von mit dem mindestens einen ersten optischen Splitter optisch gekoppelten Array-Elementen, wobei jedes Array-Element umfasst:
einen ersten Demultiplexer (210, 210a-n), DEMUX, der zum Trennen des kombinierten photonischen Eingangs in eine Vielzahl von elementaren Kanälen, die der Vielzahl von Komponentenwellenlängen entsprechen, konfiguriert ist;
ein Array von Dämpfungsgliedern (212a-m), die mit dem ersten DEMUX optisch gekoppelt sind, wobei jedes Dämpfungsglied zum Apodisieren des entsprechenden elementaren Kanals konfiguriert ist;
einen zweiten Multiplexer (214, 214a-n) (MUX), der mit dem Array von Dämpfungsgliedern optisch gekoppelt ist, wobei der zweite MUX zum Kombinieren der apodisierten Elementarkanäle zu einem Elementeingang (216, 216a-n) konfiguriert ist;
mindestens ein Antennenelement (108, 108a-n), das zum Empfangen eines eingehenden Hochfrequenz-, HF-Signals (122) konfiguriert ist;
einen elektro-optischen Modulator (106, 106a-n), EOM, der mit dem Antennenelement in Verbindung steht und optisch mit dem zweiten MUX gekoppelt ist, wobei die EOM zum Generieren von mindestens zwei modulierten photonischen Signalen (218a-n, 220an) konfiguriert ist, indem der elementare Eingang basierend auf dem eingehenden HF-Signal moduliert wird;
mindestens zwei zweite DEMUXE (222a-n, 224a-n), die mit dem EOM optisch gekoppelt sind, wobei jeder zweite DEMUX zum Trennen des zugeordneten modulierten photonischen Signals in ein Array von optischen Verzögerungskanälen, das der Vielzahl von Komponentenwellenlängen entspricht, konfiguriert ist;
ein Array (226a-m, 228a-m, 230a-m, 232a-m, 234a-m, 236a-m, 238am, 240a-m) von optischen Zeitverzögerungseinheiten, TDU, die mit jedem zweiten DEMUX optisch gekoppelt sind, wobei jede optische TDU zum Verzögern des entsprechenden optischen Verzögerungskanals um eine Zeitverzögerung entsprechend einer Komponentenwellenlänge konfiguriert ist;
und
eine Vielzahl von zweiten optischen Splittern (306, 308), die mit den optischen TDU optisch gekoppelt sind, wobei jeder zweite optische Splitter zum Aufteilen des entsprechenden zeitverzögerten optischen Verzögerungskanals in einen ersten verzögerten photonischen Kanal (242a-m, 246a-m) und einen zweiten verzögerten photonischen Kanal (310, 312) konfiguriert ist;
eine Vielzahl von Singlemode-/Multimode-, SM/MM-Kopplern (114a-d), die mit der Vielzahl von Arrayelementen optisch gekoppelt sind und Folgendes umfassen:
eine Vielzahl von ersten SM/MM-Kopplern (114a), die 1) zum Empfangen der Vielzahl von ersten verzögerten photonischen Kanälen (242a-n, 246a-n, 318a-d, 320a-d) und 2) zum Generieren einer Vielzahl von ersten photonischen Ausgangssignalen konfiguriert sind, die mindestens einen Antennenstrahl (244, 244a-b) enthalten, der jeder Komponentenwellenlänge entspricht,
indem zwei oder mehr erste verzögerte photonische Kanäle kombiniert werden;
und
eine Vielzahl von zweiten SM/MM-Kopplern (114b-d), die 1) zum Empfangen der Vielzahl von zweiten verzögerten photonischen Kanälen (310, 312, 322a-d, 324a-d, 326a-d, 328a-d, 330a-d, 332a-d) und 2) zum Generieren einer Vielzahl von zweiten photonischen Ausgangssignalen (334, 336, 338) konfiguriert sind, indem zwei oder mehr zweite verzögerte photonische Kanäle kombiniert werden, wobei die Vielzahl von zweiten photonischen Ausgangssignalen Signale mit mindestens einem photonischen Komparatorausgang beinhaltet;
und
eine Vielzahl von Photodetektoren (116a-d), die mit der Vielzahl von SM/MM-Kopplern optisch gekoppelt sind und Folgendes umfassen:
eine Vielzahl von ersten Photodetektoren (116a), die zum Konvertieren des mindestens einen Antennenstrahls in ein HF-Strahlsignal (248, 248a-b) konfiguriert sind;
und
eine Vielzahl von zweiten Photodetektoren (116b-d), die zum Konvertieren des mindestens einen photonischen Komparatorausgangs in ein HF-Ausgangssignal (340, 342, 344) konfiguriert sind.

2. Mehrstrahliger photonischer Monopulskomparator (200, 300) nach Anspruch 1, wobei:
die Vielzahl von photonischen Quellen M photonische Quellen beinhaltet, wobei M eine ganze Zahl ist, wobei jede photonische Quelle einer Komponentenwellenlänge zugeordnet ist;
die Vielzahl von Elementarkanälen M Elementarkanäle beinhaltet, die den M Komponentenwellenlängen entsprechen;
das Array von Dämpfungsgliedern M Dämpfungsglieder (212a-m) beinhaltet, die den M-Komponenten-Wellenlängen entsprechen;
jeder zweite DEMUX zum Trennen des zugeordneten modulierten photonischen Signals in ein Array von M optischen Verzögerungskanälen, die den M Komponentenwellenlängen entsprechen, konfiguriert ist;
die Vielzahl von ersten SM/MM-Kopplern (114a) M erste SM/MM-Koppler beinhaltet, wobei jeder erste SM/MM-Koppler zum Generieren des Antennenstrahls entsprechend der Komponentenwellenlänge des entsprechenden ersten optischen Verzögerungskanals konfiguriert ist;
und
die Vielzahl von ersten Photodetektoren (116a) M erste Photodetektoren entsprechend den M Komponenten-Wellenlängen beinhaltet.

3. Mehrstrahliger photonischer Monopulskomparator (200, 300) nach Anspruch 2, wobei der mindestens eine photonische Komparatorausgang Folgendes beinhaltet:
1) einen ersten, einer Höhendifferenz entsprechenden photonischen Komparatorausgang (334), zu einer ersten Vielzahl von M zweiten SM/MM-Kopplern (114b) und zu einer ersten Vielzahl von M zweiten Photodetektoren (116c);
2) einen zweiten, einer Summe entsprechenden photonischen Komparatorausgang (336) zu einer zweiten Vielzahl von M zweiten SM/MM-Kopplern (114c) und einer zweiten Vielzahl von M zweiten Photodetektoren (114d);
und
3) einen dritten, einer Azimutdifferenz entsprechenden photonischen Komparatorausgang (338) zu einer dritten Vielzahl von M SM/MM-Kopplern (114d) und einer dritten Vielzahl von M zweiten Photodetektoren (116d).

4. Mehrstrahliger photonischer Monopulskomparator (200, 300) nach Anspruch 2, wobei:
der EOM einen Mach-Zehnder-Modulator, MZM, beinhaltet, der zum Generieren mindestens eines positiv modulierten photonischen Signals (218, 218a-n) und eines negativ modulierten photonischen Signals (220, 220a-n), die eine relative HF-Phase von 180 Grad aufweisen, konfiguriert ist;
die mindestens zwei zweiten DEMUXe beinhalten:
einen positiven DEMUX (222, 222a-n), der zum Trennen des positiv modulierten photonischen Signals in ein Array von M positiven optischen Verzögerungskanälen, die den M-Komponenten-Wellenlängen entsprechen, konfiguriert ist;
und
einen negativen DEMUX (224, 224a-n), der zum Trennen des negativ modulierten photonischen Signals in ein Array von M negativen optischen Verzögerungskanälen, die den M Komponentenwellenlängen entsprechen, konfiguriert ist;
und
das Array optischer TDUs beinhaltet:
ein Array von M positiven TDUs (226a-m, 230a-m, 234a-m, 238am), die mit dem positiven DEMUX optisch gekoppelt sind, wobei jede positive TDU zum Verzögern des entsprechenden positiven optischen Verzögerungskanals um eine Zeitverzögerung, die einer Komponentenwellenlänge der M Komponentenwellenlängen entspricht, konfiguriert ist;
und
ein Array von M negativen TDUs (228a-m, 232a-m, 236a-m, 240am), die mit dem negativen DEMUX optisch gekoppelt sind, wobei jede negative TDU zum Verzögern des entsprechenden negativen optischen Verzögerungskanals um eine Zeitverzögerung, die einer Komponentenwellenlänge der M Komponentenwellenlängen entspricht, konfiguriert ist.

5. Mehrstrahliger photonischer Monopulskomparator (200, 300) nach einem der vorstehenden Ansprüche, wobei der mindestens eine erste optische Splitter einen Quadrantensplitter (302) beinhaltet, der zum Aufteilen des kombinierten photonischen Eingangs in vier photonische Quadranteneingänge konfiguriert ist, wobei jeder photonische Quadranteneingang einem Quadranten-Subarray entspricht.

6. Mehrstrahliger photonischer Monopulskomparator (200, 300) nach Anspruch 5, wobei der mindestens eine erste optische Splitter einen mit jedem Quadrantensplitter gekoppelten Elementarsplitter (304) beinhaltet, wobei jeder Elementarsplitter zum Aufteilen des photonischen Quadranteneingangs in eine Vielzahl von N Elementareingängen konfiguriert ist, wobei N eine ganze Zahl ist, wobei jeder Elementareingang einem Array-Element der Vielzahl von N Array-Elementen entspricht, die dem Quadranten-Subarray zugeordnet sind,
wobei
der erste DEMUX des entsprechenden Array-Elements zum Trennen des entsprechenden Elementeingangs in die Vielzahl von Elementkanälen konfiguriert ist.

7. Mehrstrahliger photonischer Monopulskomparator (200, 300) nach Anspruch 6, wobei:
jeder erste SM/MM-Koppler (114a) zum Empfangen einer Vielzahl von 4N ersten verzögerten photonischen Kanälen (318a-d, 320a-d), die jedem Array-Element jedes Quadranten-Subarrays entsprechen, konfiguriert ist;
jeder zweite SM/MM-Koppler (114b-d) zum Empfangen einer Vielzahl von 4N zweiten verzögerten photonischen Kanälen (322a-d, 324a-d, 326a-d, 328a-d, 330a-d, 332a-d), die jedem Array-Element jedes Quadranten-Subarrays entsprechen, konfiguriert ist.
und
die Vielzahl von ersten SM/MM-Kopplern und die Vielzahl von zweiten SM/MM-Kopplern für gleichzeitigen Betrieb konfiguriert sind.

8. Mehrstrahliger photonischer Monopulskomparator (200, 300) nach Anspruch 7, wobei jeder empfangene erste verzögerte optische Kanal und jeder empfangene zweite verzögerte optische Kanal einen photonischen Kanal positiver Polarität oder einen photonischen Kanal negativer Polarität mit einer relativen Phase von 180 Grad umfasst.

9. Mehrstrahliger photonischer Monopulskomparator nach einem der vorstehenden Ansprüche, ferner umfassend:
mindestens einen digitalen Signalprozessor (346), DSP, der mit der Vielzahl von zweiten Fotodetektoren gekoppelt ist, wobei der DSP zum Digitalisieren und Berechnen einer Ankunftswinkel-Information, die dem mindestens einen eingehenden HF-Signal (122) entspricht, basierend auf dem mindestens einen entsprechenden HF-Ausgangssignal (340, 342, 344) konfiguriert ist.

10. Verfahren (400) für mehrstrahlige photonische Monopulskomparatoroperationen, umfassend:
Generieren einer Vielzahl von M photonischen Eingängen (206a-m) über mindestens eine photonische Eingangsquelle (202), wobei jeder photonische Eingang einer Komponentenwellenlänge entspricht;
Multiplexen der Vielzahl von M photonischen Eingängen in einen kombinierten photonischen Eingang (204); **gekennzeichnet durch**:
Aufteilen des kombinierten photonischen Eingangs in eine Vielzahl von äquivalenten kombinierten photonischen Eingängen;
Demultiplexen jedes kombinierten photonischen Eingangs in eine Vielzahl von M elementaren Kanälen;
Apodisieren jedes der Vielzahl von elementaren Kanälen über eine Vielzahl von Dämpfungsgliedern (212a-m);
Multiplexen jeder Vielzahl von apodisierten Elementkanälen in einen apodisierten Elementeingang (216);
Empfangen mindestens eines eingehenden HF-Signals (122) über ein Antennenelement (108, 108a-n);
Generieren zweier oder mehrerer modulierter photonischer Signale (218, 218a-n, 220, 220a-n) durch Modulieren jedes der apodisierten elementaren Eingänge in Abhängigkeit von dem empfangenen eingehenden HF-Signal über mindestens einen elektrooptischen Modulator (106, 106a-n), EOM;
Demultiplexen jedes modulierten photonischen Signals in eine Vielzahl von optischen Verzögerungskanälen, die der Vielzahl von M Komponentenwellenlängen entsprechen;
Verzögern jedes optischen Verzögerungskanals gemäß einer Zeitverzögerung (226a-m, 228a-m, 230a-m, 232a-m, 234a-m, 236am, 238a-m, 240a-m), die der entsprechenden Komponentenwellenlänge zugeordnet ist;
Kopieren jedes zeitverzögerten optischen Verzögerungskanals in einen ersten verzögerten optischen Kanal (242a-n, 246a-n) und einen zweiten verzögerten optischen Kanal (310, 312);
Kombinieren, der Vielzahl von ersten optischen Verzögerungskanälen zu einer Vielzahl von M Antennenstrahlen (244, 244a-b), die der Vielzahl von M Komponentenwellenlängen entsprechen, über eine Vielzahl von ersten Singlemode-/Multimode-, SM/MM-Kopplern (114a);
Kombinieren der Vielzahl von zweiten optischen Verzögerungskanälen zu einer Vielzahl von photonischen Komparatorausgängen (334, 336, 338), wobei jeder photonische Komparatorausgang einem Antennenstrahl der Vielzahl von M Antennenstrahlen entspricht, über eine Vielzahl von zweiten SM/MM-Kopplern (114b-d);
Generieren einer Vielzahl von M HF-Strahlsignalen (248, 248a-b) basierend auf der Vielzahl von M-Antennenstrahlen über eine Vielzahl von ersten Photodioden (116a);
und
Generieren einer Vielzahl von HF-Ausgangssignalen (340, 342, 344) basierend auf der Vielzahl von Komparatorausgängenüber eine Vielzahl von zweiten Photodioden (116b-d).

11. Verfahren (400) nach Anspruch 10, wobei das Aufteilen des kombinierten photonischen Eingangs in eine Vielzahl von äquivalenten kombinierten photonischen Eingängen beinhaltet:
Aufteilen des kombinierten photonischen Eingangs in eine Vielzahl von vier photonischen Quadranteneingängen, wobei jeder photonische Quadranteneingang einem Quadranten-Subarray entspricht;
und
Aufteilen jedes photonischen Quadranteneingangs in eine Vielzahl von N Elementeingängen, die einer Vielzahl von N Array-Elementen entsprechen, die dem Quadranten-Subarray zugeordnet sind.

12. Verfahren (400) nach Anspruch 10 oder 11, wobei das Generieren von zwei oder mehr modulierten photonischen Signalen durch Modulieren jedes der apodisierten kombinierten photonischen Eingänge gemäß dem empfangenen eingehenden HF-Signal über einen elektrooptischen Modulator, EOM, beinhaltet:
Generieren mindestens eines positiv modulierten photonischen Signals (218, 218a-n) und eines negativ modulierten photonischen Signals (220, 220a-n) mit einer relativen Phase von 180 Grad durch Modulieren jedes apodisierten kombinierten photonischen Eingangs in Abhängigkeit von dem empfangenen eingehenden HF-Signal über einen Mach-Zehnder-Modulator, (MZM).

13. Verfahren (400) nach einem der Ansprüche 10-12, wobei das Kombinieren der Vielzahl von zweiten optischen Verzögerungskanälen zu einer Vielzahl von Komparatorausgängen, wobei jeder Komparatorausgang einem Antennenstrahl der Vielzahl von M Antennenstrahlen entspricht, über eine Vielzahl von zweiten SM/MM-Kopplern Folgendes beinhaltet:
Kombinieren der Vielzahl von zweiten optischen Verzögerungskanälen zu mindestens einem von 1) einem ersten Komparatorausgang (334), der einer Höhendifferenz des Antennenstrahls entspricht, 2) einem zweiten Komparatorausgang (336), der einer Summe des Antennenstrahls entspricht, und 3) einem dritten Komparatorausgang (338), der einer Azimutaldifferenz des Antennenstrahls entspricht, über eine Vielzahl von zweiten SM/MM-Kopplern (114b-d).

14. Verfahren (400) nach einem der Ansprüche 10-13, wobei:
Kombinieren der Vielzahl von zweiten optischen Verzögerungskanälen zu einer Vielzahl von photonischen Komparatorausgängen über eine Vielzahl von zweiten SM/MM-Kopplern beinhaltet:
Kombinieren der Vielzahl von zweiten optischen Verzögerungskanälen zu einer Vielzahl von photonischen Komparatorausgängen (334, 336, 338) gleichzeitig mit dem Kombinieren der Vielzahl von ersten optischen Verzögerungskanälen zu einer Vielzahl von M Antennenstrahlen (244) über eine Vielzahl von ersten Single-Mode/Multimode (SM/MM)-Kopplern;
und
Generieren einer Vielzahl von HF-Ausgangssignalen basierend auf der Vielzahl von Komparatorausgängen, über eine Vielzahl von zweiten Photodioden beinhaltet:
Generieren der Vielzahl von HF-Ausgangssignalen (340, 342, 344) gleichzeitig mit dem Generieren der Vielzahl von M HF-Strahlsignalen (248) über eine Vielzahl von zweiten Photodioden.

15. Verfahren (400) nach einem der Ansprüche 10-14, ferner umfassend:
Bestimmen einer dem mindestens einen eingehenden HF-Signal (122) entsprechenden Ankunftswinkel-Information basierend auf dem mindestens einen entsprechenden HF-Ausgangssignal (340, 342, 344) über mindestens einen digitalen Signalprozessor (346).

## Revendications

1. Comparateur monopulsé photonique à faisceaux multiples (200, 300), comprenant :
une pluralité de sources d'entrée photonique (202), chaque source d'entrée photonique étant configurée pour générer une entrée photonique (206a-m) associée à une longueur d'onde composante ;
un premier multiplexeur (208), mux, couplé optiquement à la pluralité de sources d'entrée photonique et configuré pour combiner la pluralité d'entrées photoniques en une entrée photonique combinée (204) ;
ledit comparateur monopulsé photonique (200, 300) étant **caractérisé en ce qu'**il comprend en outre :
au moins un premier diviseur optique (302, 304) couplé optiquement au premier mux et configuré pour diviser l'entrée photonique combinée en une pluralité d'entrées photoniques combinées ;
une pluralité d'éléments de réseau couplés optiquement à l'au moins un premier diviseur optique, chaque élément de réseau comprenant :
un premier démultiplexeur (210, 210a-n), demux, configuré pour séparer l'entrée photonique combinée en une pluralité de canaux élémentaires correspondant à la pluralité de longueurs d'ondes composantes ;
un réseau d'atténuateurs (212a-m) couplés optiquement au premier demux, chaque atténuateur étant configuré pour apodiser le canal élémentaire correspondant ;
un second multiplexeur (214, 214a-n) (mux) couplé optiquement au réseau d'atténuateurs, le second mux étant configuré pour combiner les canaux élémentaires apodisés en une entrée élémentaire (216, 216a-n) ;
au moins un élément d'antenne (108, 108a-n) configuré pour recevoir un signal radiofréquence, RF, entrant (122) ;
un modulateur électro-optique (106, 106a-n), EOM, en communication avec l'élément d'antenne et couplé optiquement au second mux, l'EOM étant configuré pour générer au moins deux signaux photoniques modulés (218a-n, 220a-n) en modulant l'entrée élémentaire sur la base du signal RF entrant ;
au moins deux seconds demuxs (222a-n, 224a-n) couplés optiquement à l'EOM, chaque second demux étant configuré pour séparer le signal photonique modulé associé en un réseau de canaux de retard optique correspondant à la pluralité de longueurs d'ondes composantes ;
un réseau (226a-m, 228a-m, 230a-m, 232a-m, 234a-m, 236a-m, 238a-m, 240a-m) d'unités de retard optique, TDU, couplées optiquement à chaque second demux, chaque TDU optique étant configurée pour retarder le canal de retard optique correspondant d'un retard correspondant à une longueur d'onde composante ;
et
une pluralité de seconds diviseurs optiques (306, 308) couplés optiquement aux TDU optiques, chaque second diviseur optique étant configuré pour diviser le canal de retard optique retardé correspondant en un premier canal photonique retardé (242a-m, 246a-m) et un second canal photonique retardé (310, 312) ;
une pluralité de coupleurs (114a-d) monomodes/multimodes, SM/MM, couplés optiquement à la pluralité d'éléments de réseau et comprenant :
une pluralité de premiers coupleurs SM/MM (114a) configurés pour 1) recevoir la pluralité de premiers canaux photoniques retardés (242a-n, 246a-n, 318a-d, 320a-d) et 2) générer une pluralité de premiers signaux de sortie photoniques comportant au moins un faisceau d'antenne (244, 244a-b) correspondant à chaque longueur d'onde composante en combinant deux premiers canaux photoniques retardés ou plus ;
et
une pluralité de seconds coupleurs SM/MM (114b-d) configurés pour 1) recevoir la pluralité de seconds canaux photoniques retardés (310, 312, 322a-d, 324a-d, 326a-d, 328a-d, 330a-d, 332a-d) et 2) générer une pluralité de seconds signaux de sortie photoniques (334, 336, 338) en combinant deux seconds canaux photoniques retardés ou plus, la pluralité de seconds signaux de sortie photoniques comportant au moins une sortie de comparateur photonique ;
et
une pluralité de photodétecteurs (116a-d) couplés optiquement à la pluralité de coupleurs SM/MM et comprenant :
une pluralité de premiers photodétecteurs (116a) configurés pour convertir l'au moins un faisceau d'antenne en un signal de faisceau RF (248, 248a-b) ;
et
une pluralité de seconds photodétecteurs (116b-d) configurés pour convertir l'au moins une sortie de comparateur photonique en un signal de sortie RF (340, 342, 344).

2. Comparateur monopulsé photonique à faisceaux multiples (200, 300) selon la revendication 1, dans lequel :
la pluralité de sources photoniques comporte M sources photoniques où M est un entier, chaque source photonique étant associée à une longueur d'onde composante ;
la pluralité de canaux élémentaires comporte M canaux élémentaires correspondant aux M longueurs d'ondes composantes ;
le réseau d'atténuateurs comporte M atténuateurs (212a-m) correspondant aux M longueurs d'ondes composantes ;
chaque second demux est configuré pour séparer le signal photonique modulé associé en un réseau de M canaux de retard optique correspondant aux M longueurs d'ondes composantes ;
la pluralité de premiers coupleurs SM/MM (114a) comporte M premiers coupleurs SM/MM, chaque premier coupleur SM/MM étant configuré pour générer le faisceau d'antenne correspondant à la longueur d'onde composante du premier canal de retard optique correspondant ;
et
la pluralité de premiers photodétecteurs (116a) comporte M premiers photodétecteurs correspondant aux M longueurs d'ondes composantes.

3. Comparateur monopulsé photonique à faisceaux multiples (200, 300) selon la revendication 2, dans lequel l'au moins une sortie de comparateur photonique comporte :
1) une première sortie de comparateur photonique (334) correspondant à une différence d'élévation, à une première pluralité de M seconds coupleurs SM/MM (114b) et à une première pluralité de M seconds photodétecteurs (116c) ;
2) une deuxième sortie de comparateur photonique (336) correspondant à une somme, à une deuxième pluralité de M seconds coupleurs SM/MM (114c), et à une deuxième pluralité de M seconds photodétecteurs (114d) ;
et
3) une troisième sortie de comparateur photonique (338) correspondant à une différence azimutale, à une troisième pluralité de M coupleurs SM/MM (114d), et à une troisième pluralité de M seconds photodétecteurs (116d).

4. Comparateur monopulsé photonique à faisceaux multiples (200, 300) selon la revendication 2, dans lequel :
l'EOM comporte un modulateur Mach-Zehnder, MZM, configuré pour générer au moins un signal photonique modulé positif (218, 218a-n) et un signal photonique modulé négatif (220, 220a-n) ayant une phase RF relative de 180 degrés ;
les au moins deux seconds demuxs comportent :
un demux positif (222, 222a-n) configuré pour séparer le signal photonique modulé positif en un réseau de M canaux de retard optique positifs correspondant aux M longueurs d'ondes composantes ;
et
un demux négatif (224, 224a-n) configuré pour séparer le signal photonique modulé négatif en un réseau de M canaux de retard optique négatifs correspondant aux M longueurs d'ondes composantes ;
et
le réseau de TDU optiques comporte :
un réseau de M TDU positives (226a-m, 230a-m, 234a-m, 238a-m) couplées optiquement au demux positif, chaque TDU positive étant configurée pour retarder le canal de retard optique positif correspondant d'un retard correspondant à une longueur d'onde composante des M longueurs d'ondes composantes ;
et
un réseau de M TDU négatives (228a-m, 232a-m, 236a-m, 240a-m) couplées optiquement au demux négatif, chaque TDU négative étant configurée pour retarder le canal de retard optique négatif correspondant d'un retard correspondant à une longueur d'onde composante des M longueurs d'ondes composantes ;

5. Comparateur monopulsé photonique à faisceaux multiples (200, 300) selon une quelconque revendication précédente, dans lequel l'au moins un premier diviseur optique comporte un diviseur à quadrant (302) configuré pour diviser l'entrée photonique combinée en quatre entrées photoniques à quadrant, chaque entrée photonique à quadrant correspondant à un sous-réseau à quadrant.

6. Comparateur monopulsé photonique à faisceaux multiples (200, 300) selon la revendication 5, dans lequel l'au moins un premier diviseur optique comporte un diviseur élémentaire (304) couplé à chaque diviseur à quadrant, chaque diviseur élémentaire étant configuré pour diviser l'entrée photonique à quadrant en une pluralité de N entrées élémentaires, où N est un entier, chaque entrée élémentaire correspondant à un élément de réseau de la pluralité de N éléments de réseau associés au sous-réseau à quadrant,
dans lequel
le premier demux de l'élément de réseau correspondant est configuré pour séparer l'entrée élémentaire correspondante dans la pluralité de canaux élémentaires.

7. Comparateur monopulsé photonique à faisceaux multiples (200, 300) selon la revendication 6, dans lequel :
chaque premier coupleur SM/MM (114a) est configuré pour recevoir une pluralité de 4N premiers canaux photoniques retardés (318a-d, 320a-d) correspondant à chaque élément de réseau de chaque sous-réseau à quadrant ;
chaque second coupleur SM/MM (114b-d) est configuré pour recevoir une pluralité de 4N seconds canaux photoniques retardés (322a-d, 324a-d, 326a-d, 328a-d, 330a-d, 332a-d) correspondant à chaque élément de réseau de chaque sous-réseau à quadrant.
et
la pluralité de premiers coupleurs SM/MM et la pluralité de seconds coupleurs SM/MM sont configurés pour un fonctionnement simultané.

8. Comparateur monopulsé photonique à faisceaux multiples (200, 300) selon la revendication 7, dans lequel chaque premier canal optique retardé reçu et chaque second canal optique retardé reçu incorpore un canal photonique de polarité positive ou un canal photonique de polarité négative ayant une phase relative de 180 degrés.

9. Comparateur monopulsé photonique à faisceaux multiples selon une quelconque revendication précédente, comprenant en outre :
au moins un processeur de signaux numériques (346), DSP, couplé à la pluralité de seconds photodétecteurs, le DSP étant configuré pour numériser et/ou calculer des informations d'angle d'arrivée correspondant à l'au moins un signal RF entrant (122) sur la base de l'au moins un signal de sortie RF correspondant (340, 342, 344).

10. Procédé (400) pour des opérations de comparateur monopulsé photonique à faisceaux multiples, comprenant :
la génération d'une pluralité de M entrées photoniques (206a-m) via au moins une source d'entrée photonique (202), chaque entrée photonique correspondant à une longueur d'onde composante ;
le multiplexage de la pluralité de M entrées photoniques en une entrée photonique combinée (204) ; **caractérisé par** :
la division de l'entrée photonique combinée en une pluralité d'entrées photoniques combinées équivalentes ;
le démultiplexage de chaque entrée photonique combinée en une pluralité de M canaux élémentaires ;
l'apodisation de chacun de la pluralité de canaux élémentaires via une pluralité d'atténuateurs (212a-m) ;
le multiplexage de chaque pluralité de canaux élémentaires apodisés en une entrée élémentaire apodisée (216) ;
la réception d'au moins un signal RF entrant (122) via un élément d'antenne (108, 108a-n) ;
la génération de deux signaux photoniques modulés (218, 218an, 220, 220a-n) ou plus en modulant, via au moins un modulateur électro-optique (106, 106a-n), EOM, chacune des entrées élémentaires apodisées en fonction du signal RF entrant reçu ;
le démultiplexage de chaque signal photonique modulé en une pluralité de canaux de retard optique correspondant à la pluralité de M longueurs d'ondes composantes ;
le retardement de chaque canal de retard optique selon un retard temporel (226a-m, 228a-m, 230a-m, 232a-m, 234a-m, 236a-m, 238a-m, 240a-m) associé à la longueur d'onde composante correspondante ;
la copie de chaque canal de retard optique retardé dans un premier canal de retard optique (242a-n, 246a-n) et un second canal de retard optique (310, 312) ;
la combinaison, via une pluralité de premiers coupleurs (114a) monomodes/multimodes SM/MM, de la pluralité de premiers canaux de retard optique en une pluralité de M faisceaux d'antenne (244, 244a-b) correspondant à la pluralité de M longueurs d'ondes composantes ;
la combinaison, via une pluralité de seconds coupleurs SM/MM (114b-d), de la pluralité de seconds canaux de retard optique en une pluralité de sorties de comparateur photonique (334, 336, 338), chaque sortie de comparateur photonique correspondant à un faisceau d'antenne de la pluralité de M faisceaux d'antenne ;
la génération, via une pluralité de premières photodiodes (116a), d'une pluralité de M signaux de faisceau RF (248, 248a-b) sur la base de la pluralité de M faisceaux d'antenne ;
et
la génération, via une pluralité de secondes photodiodes (116b-d), d'une pluralité de signaux de sortie RF (340, 342, 344) sur la base de la pluralité de sorties de comparateur.

11. Procédé (400) selon la revendication 10, dans lequel la division de l'entrée photonique combinée en une pluralité d'entrées photoniques combinées équivalentes comporte :
la division de l'entrée photonique combinée en une pluralité de quatre entrées photoniques à quadrant, chaque entrée photonique à quadrant correspondant à un sous-réseau à quadrant ;
et
la division de chaque entrée photonique à quadrant en une pluralité de N entrées élémentaires correspondant à une pluralité de N éléments de réseau associés au sous-réseau à quadrant.

12. Procédé (400) selon la revendication 10 ou 11, dans lequel la génération de deux signaux photoniques modulés ou plus en modulant, via un modulateur électro-optique, EOM, chacune des entrées photoniques combinées apodisées en fonction du signal RF entrant reçu comporte :
la génération d'au moins un signal photonique modulé positif (218, 218a-n) et d'un signal photonique modulé négatif (220, 220a-n) ayant une phase relative de 180 degrés en modulant, via au moins un modulateur Mach-Zehnder (MZM), chaque entrée photonique combinée apodisée en fonction du signal RF entrant reçu.

13. Procédé (400) selon l'une quelconque des revendications 10 à 12, dans lequel la combinaison, via une pluralité de seconds coupleurs SM/MM, de la pluralité de seconds canaux de retard optique en une pluralité de sorties de comparateur, chaque sortie de comparateur correspondant à un faisceau d'antenne de la pluralité de M faisceaux d'antenne comporte :
la combinaison, via une pluralité de seconds coupleurs SM/MM (114b-d), de la pluralité de seconds canaux de retard optique en au moins l'une parmi 1) une première sortie de comparateur (334) correspondant à une différence d'élévation du faisceau d'antenne, 2) une deuxième sortie de comparateur (336) correspondant à une somme du faisceau d'antenne, et 3) une troisième sortie de comparateur (338) correspondant à une différence azimutale du faisceau d'antenne.

14. Procédé (400) selon l'une quelconque des revendications 10 à 13, dans lequel :
la combinaison, via une pluralité de seconds coupleurs SM/MM, de la pluralité de seconds canaux de retard optique en une pluralité de sorties de comparateur photonique comporte la combinaison de la pluralité de seconds canaux de retard optique en une pluralité de sorties de comparateur photonique (334, 336, 338) simultanément à la combinaison, via une pluralité de premiers coupleurs monomodes/multimodes (SM/MM), de la pluralité de premiers canaux de retard optique en une pluralité de M faisceaux d'antenne (244) ;
et
la génération, via une pluralité de secondes photodiodes, d'une pluralité de signaux de sortie RF sur la base de la pluralité de sorties de comparateur comporte la génération de la pluralité de signaux de sortie RF (340, 342, 344) simultanément à la génération, via une pluralité de premières photodiodes, de la pluralité de M signaux de faisceau RF (248) .

15. Procédé (400) selon l'une quelconque des revendications 10 à 14, comprenant en outre :
la détermination, via au moins un processeur de signaux numériques (346), d'informations d'angle d'arrivée correspondant à l'au moins un signal RF entrant (122) sur la base de l'au moins un signal de sortie RF correspondant (340, 342, 344) .
